# EUROPEAN PATENT APPLICATION

(11) **EP 4 645 685 A1**
(43) Date of publication of application: **05.11.2025**
(21) Application number: 24843451.6
(22) Date of filing: 12.07.2024
(51) Int. Cl.: H02S 40/34, H01R 13/70, G08B 21/18

(54) **CONNECTOR AND SOLAR POWER GENERATION DEVICE INCLUDING SAME**

(30) Priority: 18.07.2023 KR 20230093241
(71) Applicant: Hanwha Solutions Corporation, Jung-gu Seoul 04541 (KR)
(72) Inventor: BANG, Younggyun, Seoul 04541 (KR); LEE, Kangmin, Seoul 04541 (KR); KANG, Hyeonmin, Seoul 04541 (KR); KIM, Jeonghwan, Seoul 04541 (KR)
(74) Representative: Mooser, Sebastian Thomas
(86) International application number: PCT/KR2024/010068
(87) International publication number: WO 2025/018735

(57) **Abstract**

The disclosure relates to a connector and a solar power generation device including the connector, the connector characterized by including a first terminal portion, a second terminal portion spaced apart from the first terminal portion, and a safety cutoff portion provided between the first terminal portion and the second terminal portion, the safety cutoff portion operated according to temperature changes to interrupt an electrical connection between the first terminal portion and the second terminal portion.

## Description

### Technical Field

The disclosure relates to a connector and a solar power generation device including the connector.

### Background Art

In general, a solar power generation device is a device which converts light energy into electrical energy, and a plurality of solar cell modules are connected in series and parallel by wires and connectors. Solar cell modules, each connected in parallel, may be commonly connected to a solar combiner box to supply power to an inverter.

Among the causes of fire in a solar power generation device, an arc may occur due to gaps between connectors which electrically connect solar cell modules, and the connectors may overheat due to increased contact resistance and accumulation of resistance components caused by the gaps between connectors, which may lead to fire.

### Disclosure

### Technical Problem

The purpose of the disclosure is to provide a connector capable of preventing fire by cutting off power in case of abnormal overheating and a solar power generation device including the connector.

### Technical Solution

A connector according to the disclosure includes: a first terminal portion, a second terminal portion spaced apart from the first terminal portion, and a safety cutoff portion provided between the first terminal portion and the second terminal portion, the safety cutoff portion being operated according to temperature changes to interrupt an electrical connection between the first terminal portion and the second terminal portion.

The safety cutoff portion may include a first connection portion connected to the first terminal portion, a second connection portion connected to the second terminal portion, and a deformation portion of which an electrical connection to at least one of the first connection portion and the second connection portion is interrupted.

The deformation portion is connected to the first connection portion, and has a free end which is not secured to the second connection portion and is in contact with the second connection portion, and the deformation portion is thermally deformed when the temperature is equal to or higher than a set temperature so that the second connection portion and the free end may be spaced apart.

The deformation portion may be subjected to bending deformation.

The deformation portion may include a first deformation member and a second deformation member laminated with the first deformation member.

The first deformation member and the second deformation member may have different coefficients of thermal expansion.

A cover member, which surrounds the deformation portion and the second connection portion, may further be included.

The cover member may be provided with a notch.

In case that the deformation portion is deformed, the cover member may be broken.

An elastic member, which is provided on a side of the deformation portion to support the deformation portion and provides elastic force in a direction opposite to a deformation direction of the deformation portion, may further be included.

The elastic member may have a variable length depending on the deformation of the deformation portion.

The safety cutoff portion may include a first connection portion connected to the first terminal portion, a second connection portion connected to the second terminal portion, a first deformation portion connected to the first connection portion and spaced apart from the second connection portion, and a second deformation portion connected to the second connection portion, spaced apart from the first connection portion, and in contact with the first deformation portion to be electrically connected to the first deformation portion.

The first deformation portion and the second deformation portion may be spaced apart by thermal deformation in case that the temperature is equal to or higher than a set temperature.

The first deformation portion and the second deformation portion may be bent in opposite directions.

A separation distance between the first deformation portion and the second deformation portion may vary depending on voltage.

A housing portion, which accommodates the first terminal portion, the second terminal portion, and the safety cutoff portion, may further be included.

A solar power generation device according to the disclosure includes: a plurality of solar cell modules and connectors electrically connecting a plurality of the solar cell modules with each other.

The connectors may interrupt electrical connections between a plurality of the solar cell modules depending on temperature changes.

A control unit, which is connected to the connectors to detect whether the connectors are operating, may further be included.

The control unit may output an alarm in case that the connectors are operated and the electrical connections between a plurality of the solar cell modules are interrupted.

### Advantageous Effects

A connector and a solar power generation device including the connector according to an embodiment of the disclosure have the effect of preventing fire in the solar power generation device due to overheating of a connector by having a safety cutoff portion which cuts off power by thermal deformation when heated equal to or more than a set temperature.

### Description of Drawings

FIG. 1 is a cross-sectional view schematically illustrating a connector according to a first embodiment of the disclosure.
FIG. 2 is a cross-sectional view schematically illustrating a state in which a safety cutoff portion cuts off power in the connector according to the first embodiment of the disclosure.
FIG. 3 is a cross-sectional view schematically illustrating a connector according to a second embodiment of the disclosure.
FIG. 4 is a cross-sectional view schematically illustrating a connector according to a third embodiment of the disclosure.
FIG. 5 is a cross-sectional view schematically illustrating a cover member in the connector according to the third embodiment of the disclosure.
FIG. 6 is a cross-sectional view schematically illustrating a state in which a safety cutoff portion cuts off power in the connector according to the third embodiment of the disclosure.
FIG. 7 is a cross-sectional view schematically illustrating a connector according to a fourth embodiment of the disclosure.
FIG. 8 is a cross-sectional view schematically illustrating a state in which a safety cutoff portion cuts off power in the connector according to the fourth embodiment of the disclosure.
FIG. 9 is a cross-sectional view schematically illustrating a connector according to a fifth embodiment of the disclosure.
FIG. 10 is a cross-sectional view schematically illustrating a state in which a safety cutoff portion cuts off power in the connector according to the fifth embodiment of the disclosure.
FIG. 11 is a drawing schematically illustrating a solar power generation device according to the first embodiment of the disclosure.
FIG. 12 is a block diagram showing a connection relationship between a control unit and a connector in a solar power generation device according to the second embodiment of the disclosure.

### Best Mode

Hereinafter, embodiments of a connector and a solar power generation device including the connector according to the disclosure will be described with reference to the attached drawings. In this process, the thickness of lines and the size of components illustrated in the drawings may be exaggerated for clarity and convenience of explanation. In addition, the terms described below are terms defined in consideration of functions in the disclosure and may vary depending on the intention or custom of a user or an operator. Therefore, definitions of these terms should be based on the contents throughout the specification.

In addition, in the specification, when a part is said to be "connected (or linked)" to another part, this may include not only cases where it is "directly connected (or linked)" but also cases where it is "indirectly connected (or linked)" with another member in between. In the specification, when a part is said to "include (or have)" a certain component, this does not mean that it excludes other components, but rather that it may further "include (or have)" other components, unless otherwise specifically stated.

In addition, the terms "unit," "module," or "portion" for a component, as used in the specification, perform at least one function or operation. In addition, the terms "unit", "module" or "portion" may perform a function or operation by hardware, software or a combination of hardware and software. In addition, a plurality of "units", a plurality of "modules", or a plurality of "portions" may be integrated into at least one module, excluding a "unit", "module", or "portion" which should be performed on specific hardware or which are performed on at least one processor. Singular expressions may include plural expressions unless the context clearly indicates otherwise.

In addition, the same reference numerals may refer to the same components throughout the specification. Even if the same reference numerals or similar reference numerals are not mentioned or described in a particular drawing, those numerals may be described based on other drawings. In addition, even if there is a part which is not indicated with a reference numeral in a specific drawing, the part may be explained based on other drawings. In addition, the number, shape, size, and relative difference in size of detailed components included in the drawings of the application are set for convenience of understanding, and do not limit the embodiments and may be implemented in various forms.

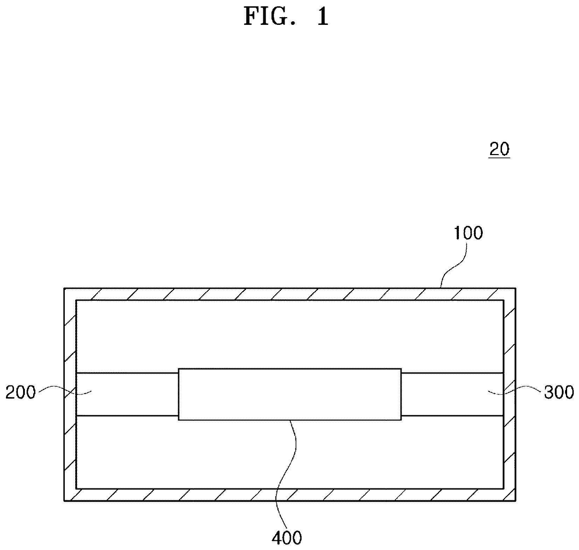

FIG. 1 is a cross-sectional view schematically illustrating a connector according to a first embodiment of the disclosure. Referring to FIGS. 1 to 9, a connector 20 according to a first embodiment of the disclosure may include a housing portion 100, a first terminal portion 200, a second terminal portion 300, and a safety cutoff portion 400.

The housing portion 100 may be formed in a box shape with an internal space. The housing portion 100 may cover the first terminal portion 200, the second terminal portion 300, and the safety cutoff portion 400 in a sealable manner, and may accommodate the first terminal portion 200, the second terminal portion 300, and the safety cutoff portion 400 in a sealable manner.

The housing portion 100 may be designed to withstand fire. As an embodiment, the housing portion 100 may include an insulation material. The housing portion 100 may include a plastic material.

The first terminal portion 200 may be provided on the inside of the housing portion 100. The first terminal portion 200 may be accommodated in the housing portion 100 and connected to a power line C provided in a solar cell module 10.

An end portion (the left end based on FIG. 1) of the first terminal portion 200 may be inserted into the housing portion 100 and fixed in position. Although not shown in the drawing, an insertion groove portion into which the first terminal portion 200 may be inserted may be formed in the housing portion 100.

As an end portion of the first terminal portion 200 is inserted into the insertion groove portion, there is an effect in which the position of the first terminal portion 200 with respect to the housing portion 100 may be stably fixed.

As an optional embodiment, a screw thread may be formed on the outer main surface of an end portion of the first terminal portion 200 facing the inner main surface of the insertion groove portion, and a thread groove portion may be formed on the inner main surface of the insertion groove portion.

The second terminal portion 300 may be provided on the inside of the housing portion 100 and spaced apart from the first terminal portion 200.

An end portion (the right end based on FIG. 1) of the second terminal portion 300 may be inserted into the housing portion 100 and fixed in position. Although not shown in the drawing, an insertion groove portion into which the second terminal portion 300 may be inserted may be formed in the housing portion 100.

As an end portion of the second terminal portion 300 is inserted into the insertion groove portion, there is an effect in which the position of the second terminal portion 300 with respect to the housing portion 100 may be stably fixed.

As an optional embodiment, a screw thread may be formed on the outer main surface of an end portion of the second terminal portion 300 facing the inner main surface of the insertion groove portion, and a thread groove portion may be formed on the inner main surface of the insertion groove portion.

The first terminal portion 200 and the second terminal portion 300 may be arranged to face each other on the same axis. The second terminal portion 300 accommodated in the housing portion 100 may be connected to a power line C provided on a solar cell module 10 adjacent to another solar cell module 10 electrically connected to the first terminal portion 200.

The first terminal portion 200 and the second terminal portion 300 may have different polarities so that current may flow in one direction. As an embodiment, the first terminal portion 200 may have a plus (+) polarity, and the second terminal portion 300 may have a minus (-) polarity. In case that the first terminal portion 200 has a minus (-) polarity, the second terminal portion 300 may have a plus (+) polarity.

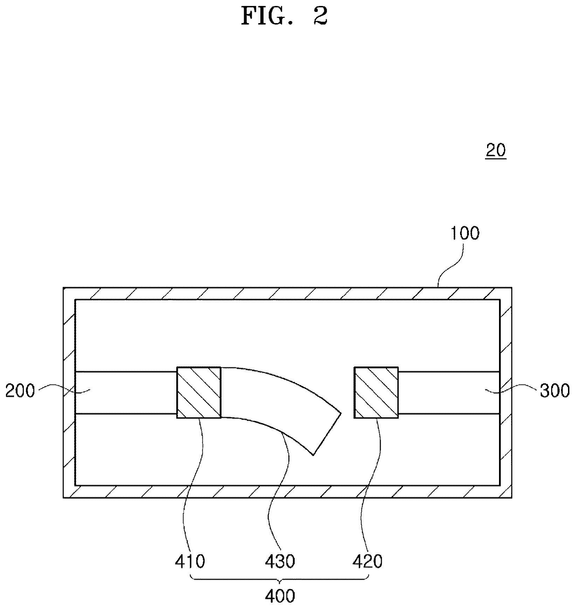

Referring to FIG. 1 and FIG. 2, the safety cutoff portion 400 may be provided between the first terminal portion 200 and the second terminal portion 300. The safety cutoff portion 400 arranged between the first terminal portion 200 and the second terminal portion 300 may be operated according to temperature changes to interrupt an electrical connection between the first terminal portion 200 and the second terminal portion 300.

Specifically, when the temperature is below a preset temperature, the safety cutoff portion 400 may form an electrical path by connecting the first terminal portion 200 and the second terminal portion 300, but when the temperature exceeds the preset temperature, the electrical path may be blocked by releasing the connection between the first terminal portion 200 and the second terminal portion 300.

FIG. 2 is a cross-sectional view schematically showing a state in which a safety cutoff portion cuts off power in a connector according to a first embodiment of the disclosure.

Referring to FIG. 2, the safety cutoff portion 400 may include a first connection portion 410, a second connection portion 420, and a deformation portion 430.

The first connection portion 410 may be connected to the first terminal portion 200. The first connection portion 410 may be fixed to an end portion (the right end based on FIG. 2) of the first terminal portion 200 facing the second terminal portion 300. The second connection portion 420 may be connected to the second terminal portion 300. The second connection portion 420 may be fixed to an end portion (the left end based on FIG. 2) of the second terminal portion 300 facing the first terminal portion 200.

Referring to FIG. 2, a deformation portion is arranged between the first connection portion 410 and the second connection portion 420, and an electrical connection to at least one of the first connection portion 410 and the second connection portion 420 may be interrupted.

In an embodiment, the deformation portion 430 may be connected to the first connection portion 410. A side (the left side base on FIG. 2) of the deformation portion 430 may be fixed to the first connection portion 410. The other side (the right side based on FIG. 2) of the deformation portion 430 facing the second connection portion 420 may be in contact with the second connection portion 420.

The other side of the deformation portion 430 in contact with the second connection portion 420 may have the structure of a free end which is not fixed to the second connection portion 420. In an embodiment, a case is described as an example in which a side of the deformation portion 430 is fixed to the first connection portion 410 and the other side of the deformation portion 430 is in contact with the second connection portion 420, but the disclosure is not limited thereto and various modifications may be possible.

The shape of the deformation portion 430 may be changed depending on the temperature. Specifically, when the temperature rises above a set temperature, the deformation portion 430 may be thermally deformed and disconnected from the second connection portion 420.

That is, when the temperature rises above a set temperature, the deformation portion 430 may be thermally deformed and spaced apart from the second connection portion 420, and the connection may be broken.

As an embodiment, the deformation portion 430 may be subjected to bending deformation. As the deformation portion 430 is bent, the free end of the deformation portion 430, which comes into contact with the second connection portion 420, may be spaced apart from the second connection portion 420, so that the electrical connection between the first terminal portion 200 and the second terminal portion 300 may be interrupted.

As another embodiment, the deformation portion 430 may be compressively deformed to shrink in length. Accordingly, the electrical connection between the first terminal portion 200 and the second terminal portion 300 may be interrupted by the free end of the deformation portion 430, which contacts the second connection portion 420, not being in contact with the second connection portion 420.

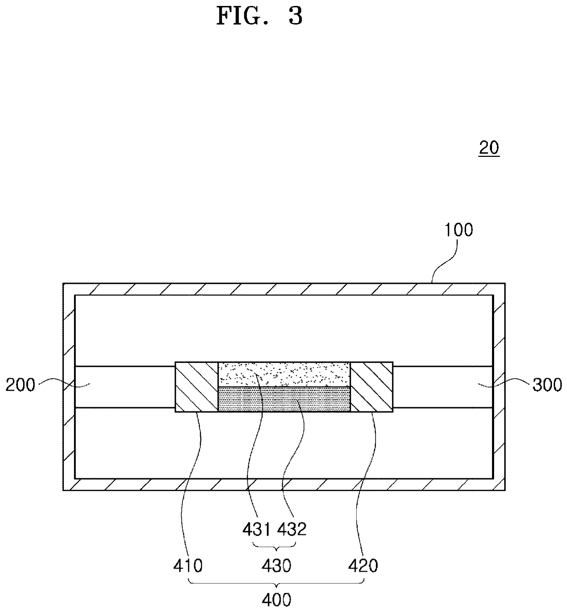

FIG. 3 is a cross-sectional view schematically showing a connector according to a second embodiment of the disclosure. Referring to FIG. 3, the deformation portion 430 may include a first deformation member 431 and a second deformation member 432.

The first deformation member 431 and the second deformation member 432 may each include a metal material.

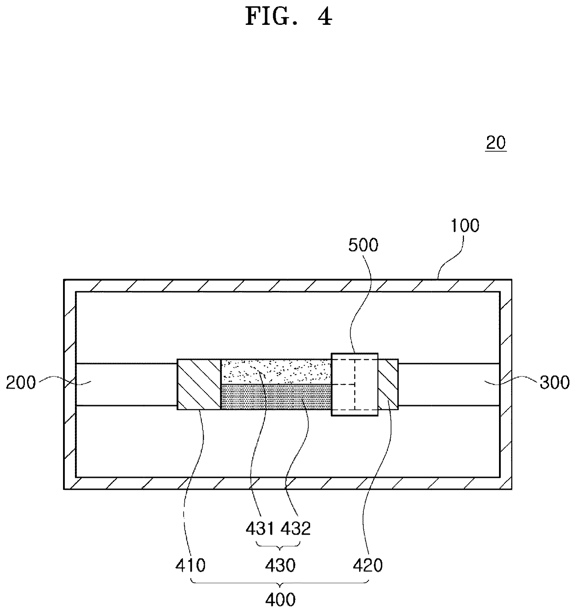

The first deformation member 431 and the second deformation member 432 may be combined in a laminated manner. Referring to FIG. 3 and FIG. 4, the first deformation member 431 may be arranged relatively higher than the second deformation member 432 along a height direction.

As an embodiment, the first deformation member 431 and the second deformation member 432 may be formed integrally through welding or the like. As another embodiment, the first deformation member 431 and the second deformation member 432 may be mechanically combined with each other.

The first deformation member 431 and the second deformation member 432 may be formed with different coefficients of thermal expansion. For example, in case that the coefficient of thermal expansion of the first deformation member 431 is formed to be greater than the coefficient of thermal expansion of the second deformation member 432, and the temperature of the deformation portion 430 rises above a set temperature, the deformation portion 430 may be bent toward the direction in which the second deformation member 432 is positioned.

FIG. 4 is a cross-sectional view schematically showing a connector according to a third embodiment of the disclosure. Referring to FIG. 4, a connector 20 according to a third embodiment of the disclosure may include a housing portion 100, a first terminal portion 200, a second terminal portion 300, a safety cutoff portion 400, and a cover member 500.

In describing the connector 20 according to the third embodiment of the disclosure, only the cover member 500 which is not described in the connector 20 according to the first embodiment of the disclosure or the connector 20 according to the second embodiment of the disclosure will be described.

As for the remaining configuration of the connector 20 according to the third embodiment of the disclosure, the description of the connector 20 according to the first embodiment of the disclosure or the connector 20 according to the second embodiment of the disclosure may be applied as it is.

The cover member 500 may be formed in a hollow shape and provided to surround the circumferential surfaces of the deformation portion 430 and the second connection portion 420. In detail, the cover member 500 may be provided to cover the free end of the deformation portion 430 in contact with the second connection portion 420 and part of the second connection portion 420.

The cover member 500 may perform a role in preventing the free end of the deformation portion 430 in contact with the second connection portion 420 from being separated from the second connection portion 420 due to external force such as vibration, external impact, or the like.

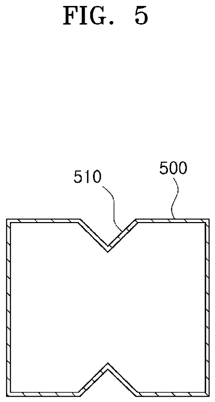

FIG. 5 is a cross-sectional view schematically showing a cover member in the connector according to the third embodiment of the disclosure. Referring to FIGS. 4 and 5, the cover member 500 may be provided with a notch 510.

The notch 510 may be formed in the shape of a groove portion along the perimeter of the outer circumferential surface of the cover member 500.

Specifically, the notch 510 may be formed recessed into the outer circumferential surface of the cover member 500. The notch 510 may be formed along the circumferential direction of the cover member 500.

Referring to FIG. 5, the inner diameter of the cover member 500 may decrease from both sides of the cover member 500 toward the center of the notch 510. The inner diameter and the outer diameter of the cover member 500 may be formed to be the smallest at the center of the notch 510.

Referring to FIG. 5, the notch 510 may be formed as inclined surfaces formed on both sides symmetrically based on the center of the notch 510.

Referring to FIG. 5, the surfaces inclined downward toward the center of the notch 510 may be connected with each other at the center of the notch 510, and as a result, when the deformation portion 430 is deformed, the deformation pressure is concentrated and the cover member 500 may be easily broken.

The notch 510 provided in the cover member 500 may be formed at the same position as the position where the free end of the deformation portion 430 and the second connection portion 420 come into contact with each other.

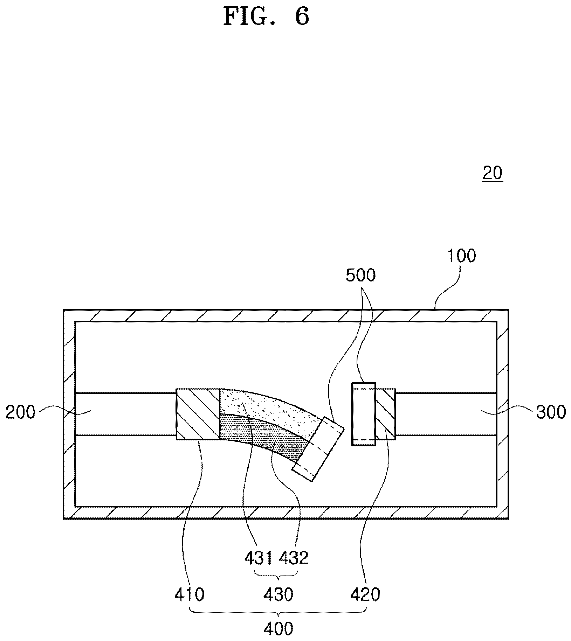

FIG. 6 is a cross-sectional view schematically showing a state in which a safety cutoff portion cuts off power in the connector according to the third embodiment of the disclosure. Referring to FIGS. 5 and 6, when the deformation portion 430 is thermally deformed and bent, the cover member 500 may be broken by the deformation pressure of the deformation portion 430. The cover member 500 may be separated into two parts based on the notch 510.

As the deformation portion 430 is bent, the free end of the deformation portion 430, which comes into contact with the second connection portion 420, may be separated from the second connection portion 420, so that the electrical connection between the first terminal portion 200 and the second terminal portion 300 may be interrupted.

As an optional embodiment, the cover member 500 may include a plurality of cover bodies which are separable from each other. Specifically, two cover bodies may be provided, and one may be coupled to the deformation portion 430, and the other may be coupled to the second connection portion 420.

In case of a normal state, a plurality of cover bodies may be coupled to each other and maintained in an attached state, and in case that the shape of the deformation portion 430 is deformed according to temperature changes, the attached state is broken by the deformation pressure and the cover bodies may be spaced apart from each other.

A plurality of cover bodies may be maintained in contact with each other by magnetic force. For example, magnetic members with different polarities may be arranged in a plurality of cover bodies and the cover bodies may be maintained in an attached state by magnetic force.

The magnetic force may be relatively smaller than the deformation pressure which occurs when the shape of the deformation portion 430 is deformed, and a plurality of cover bodies may be spaced apart from each other due to the deformation pressure.

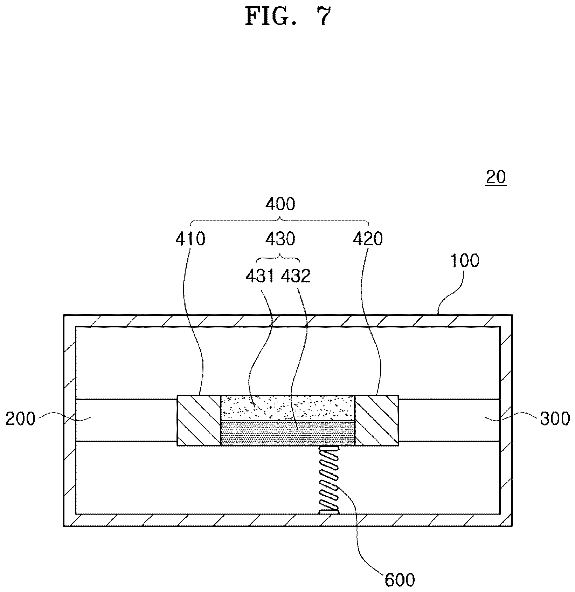

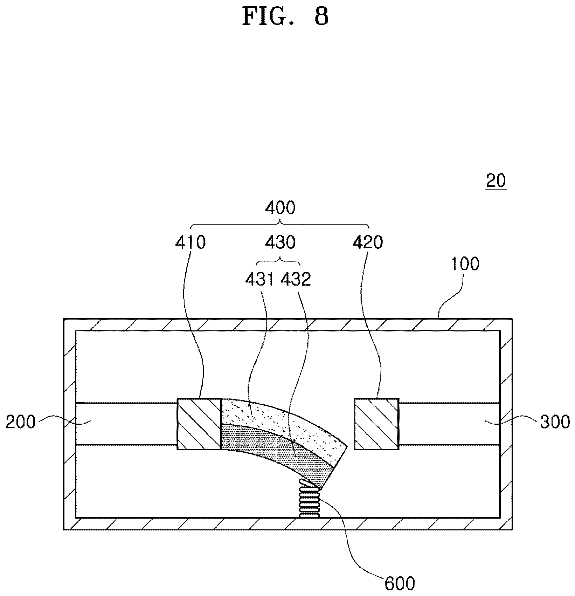

FIG. 7 is a cross-sectional view schematically showing a connector according to a fourth embodiment of the disclosure, and FIG. 8 is a cross-sectional view schematically showing a state in which a safety cutoff portion cuts off power in the connector according to the fourth embodiment of the disclosure.

Referring to FIGS. 7 and 8, a connector 20 according to a fourth embodiment of the disclosure may include a housing portion 100, a first terminal portion 200, a second terminal portion 300, a safety cutoff portion 400, and an elastic member 600.

In describing the connector 20 according to the fourth embodiment of the disclosure, only the elastic member 600 which is not described in the connector 20 according to the first embodiment of the disclosure or the connector 20 according to the second embodiment of the disclosure will be described.

As for the remaining configuration of the connector 20 according to the fourth embodiment of the disclosure, the description of the connector 20 according to the first embodiment of the disclosure or the connector 20 according to the second embodiment of the disclosure may be applied as it is.

The elastic member 600 may be provided on a side (the lower side based on FIG. 7) of the deformation portion 430 to support the deformation portion 430. The elastic member 600 may include an elastically deformable material. The elastic member 600 may provide elastic force in a direction opposite to the deformation direction of the deformation portion 430.

The elastic member 600 may perform a role in preventing the free end of the deformation portion 430, which comes into contact with the second connection portion 420, from being separated from the second connection portion 420 due to external force such as vibration, external impact, or the like.

A side of the elastic member 600 may be seated to an inner side surface of the housing portion 100, and the other side of the elastic member 600 may be seated to the free end of the deformation portion 430 to elastically support the deformation portion 430. As an embodiment, the elastic member 600 may be a coil spring.

The elastic member 600 may have a variable length depending on the deformation of the deformation portion 430. When the deformation portion 430 is thermally deformed and bent, the elastic member 600 may be elastically deformed and the length of the elastic member 600 may be contracted due to the deformation pressure of the deformation portion 430.

As the deformation portion 430 is bent, the free end of the deformation portion 430 in contact with the second connection portion 420 is separated from the second connection portion 420, so that the electrical connection between the first terminal portion 200 and the second terminal portion 300 may be interrupted.

As an optional embodiment, a support member (not shown in the drawing) may be arranged between the elastic member 600 and the deformation portion 430. The support portion may include a receiving groove portion formed in the shape of a groove portion corresponding to the shape of the outer circumferential surface of the deformation portion 430.

The receiving groove portion may be included in the support portion, and a side of the support portion opposite to the other side facing the deformation portion 430 may be configured to be coupled to the elastic member 600.

Because the deformation portion 430 is received to the receiving groove portion, movement in a vertical direction (based on FIG. 7) as well as movement in an anteroposterior direction (based on FIG. 7) due to external forces such as vibration, external impact, or the like may be blocked, thereby preventing the free end of the deformation portion 430 in contact with the second connection portion 420 from being separated from the second connection portion 420 due to the external forces.

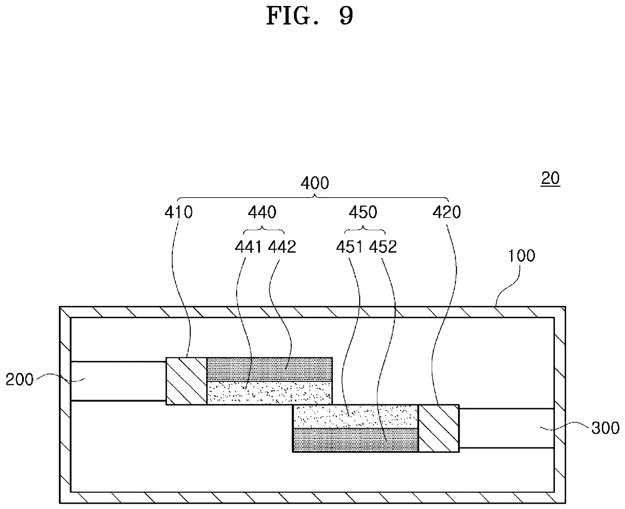

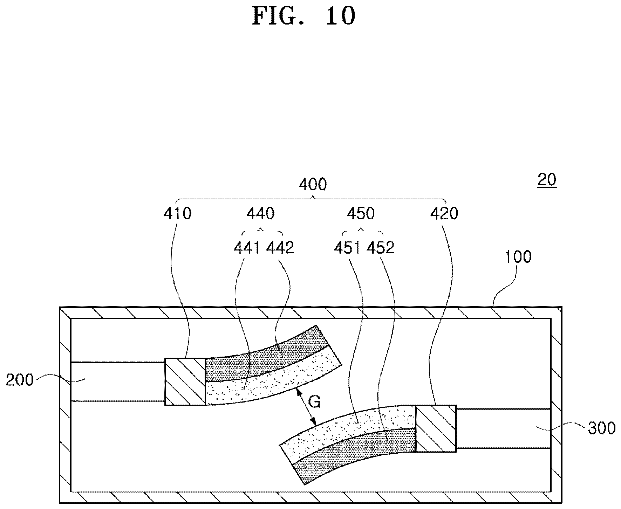

FIG. 9 is a cross-sectional view schematically showing a connector according to a fifth embodiment of the disclosure, and FIG. 10 is a cross-sectional view schematically showing a state in which a safety cutoff portion cuts off power in the connector according to the fifth embodiment of the disclosure.

Referring to FIGS. 9 and 10, a connector 20 according to a fifth embodiment of the disclosure may include a housing portion 100, a first terminal portion 200, a second terminal portion 300, and a safety cutoff portion 400.

In explaining the connector 20 according to the fifth embodiment of the disclosure, another embodiment of the safety cutoff portion 400 described in the connector 20 according to the first embodiment of the disclosure or the connector 20 according to the second embodiment of the disclosure will be explained.

As for the remaining configuration of the connector 20 according to the fifth embodiment of the disclosure, the description of the connector 20 according to the first embodiment of the disclosure or the connector 20 according to the second embodiment of the disclosure may be applied as it is.

The safety cutoff portion 400 may include a first connection portion 410, a second connection portion 420, a first deformation portion 440, and a second deformation portion 450.

The first connection portion 410 may be connected to the first terminal portion 200. The first connection portion 410 may be fixed to an end portion of the first terminal portion 200 facing the second terminal portion 300. The second connection portion 420 may be connected to the second terminal portion 300. The second connection portion 420 may be fixed to an end portion of the second terminal portion 300 facing the first terminal portion 200.

The first deformation portion 440 may be connected to the first connection portion 410. A side of the first deformation portion 440 may be fixed to the first connection portion 410. The other side of the first deformation portion 440 facing the second connection portion 420 may have the structure of a free end which is not fixed to the second connection portion 420. Therefore, the first deformation portion 440 may be spaced apart from the second connection portion 420.

The second deformation portion 450 may be connected to the second connection portion 420. A side of the second deformation portion 450 may be fixed to the second connection portion 420. The other side of the second deformation portion 450 facing the first connection portion 410 may have the structure of a free end which is not fixed to the first connection portion 410. Therefore, the second deformation portion 450 may be spaced apart from the first connection portion 410.

The first deformation portion 440 and the second deformation portion 450 may come into contact with each other to be electrically connected. In an embodiment, a case where the first deformation portion 440 and the second deformation portion 450 are laminated is described as an example, but the disclosure is not limited thereto and various modifications are possible.

The first deformation portion 440 and the second deformation portion 450 may be thermally deformed and spaced apart when the temperature rises above a set temperature. As an embodiment, the first deformation portion 440 and the second deformation portion 450 may be subjected to bending deformation. The electrical connection between the first terminal portion 200 and the second terminal portion 300 may be interrupted by the first deformation portion 440 and the second deformation portion 450 being bent in opposite directions and spaced apart from each other.

The first deformation portion 440 and the second deformation portion 450 each may include a metal material. The first deformation portion 440 may include a third deformation member 441 and a fourth deformation member 442, and the second deformation portion 450 may include a fifth deformation member 451 and a sixth deformation member 452.

The third deformation member 441 may be laminated with the fourth deformation member 442, and the fifth deformation member 451 may be laminated with the sixth deformation member 452. The third deformation member 441 of the first deformation portion 440 and the fifth deformation member 451 of the second deformation portion 450 may be laminated to come into contact with each other.

The third deformation member 441 and the fourth deformation member 442 may be formed with different coefficients of thermal expansion. For example, in case that the coefficient of thermal expansion of the third deformation member 441 is formed to be greater than the coefficient of thermal expansion of the fourth deformation member 442, and the temperature of the first deformation portion 440 rises above a set temperature, the first deformation portion 440 may be bent toward the direction in which the fourth deformation member 442 is positioned.

The fifth deformation member 451 and the sixth deformation member 452 may be formed with different coefficients of thermal expansion. For example, in case that the coefficient of thermal expansion of the fifth deformation member 451 is formed to be greater than the coefficient of thermal expansion of the sixth deformation member 452, and the second deformation portion 450 rises above a set temperature, the second deformation portion 450 may be bent toward the direction in which the sixth deformation member 452 is positioned.

As an optional embodiment, the third deformation member 441 and the fifth deformation member 451 may include the same material, and the fourth deformation member 442 and the sixth deformation member 452 may include the same material.

A separation distance G between the first deformation portion 440 and the second deformation portion 450 may be about 14.3 mm. The separation distance G between the first deformation portion 440 and the second deformation portion 450 may be different depending on voltage. As an embodiment, the separation distance G between the first deformation portion 440 and the second deformation portion 450 may be different depending on the voltage of about 600 volts (V), about 1,000 volts (V), and about 1,500 volts (V).

The separation distance G between the first deformation portion 440 and the second deformation portion 450 may be calculated by a sensor which detects the degrees of the bending deformation of the first deformation portion 440 and the second deformation portion 450.

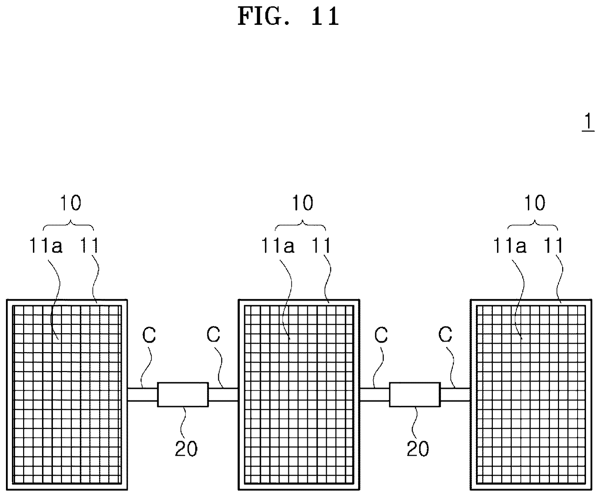

FIG. 11 is a drawing schematically illustrating a solar power generation device according to the first embodiment of the disclosure. Referring to FIG. 11, a solar power generation device 1 according to the first embodiment of the disclosure may include a solar cell module 10 and a connector 20.

The solar cell module 10 may be provided in a plural number and arranged in parallel or series. In an embodiment, the solar cell module 10 may include a panel 11 including a plurality of solar cells 11a. The panel 11 may protect the solar cells 11a by itself, and a plurality of the solar cells 11a may be arranged in a row.

In an embodiment, the solar cells 11a may be single-sided light-receiving types or double-sided light-receiving types. In addition, the solar cells 11a may be single p-n junction types or multiple p-n junction types. In addition, the solar cells 11a may be thin-film solar cells. In this way, the solar cells 11a may include various shapes and types of solar cells 11a.

The connector 20 may be provided between a plurality of solar cell modules 10. The connector 20 may connect a power line C, which is provided to a solar cell module 10, to electrically connect a plurality of solar cell modules 10 with each other. The connector 20 may interrupt electrical connections between a plurality of solar cell modules 10 depending on temperature changes.

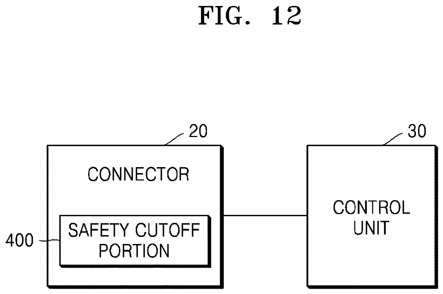

FIG. 12 is a block diagram showing a connection relationship between a control unit and a connector in a solar power generation device according to the second embodiment of the disclosure. Referring to FIG. 12, a solar power generation device 1 according to the second embodiment of the disclosure may include a solar cell module 10, a connector 20, and a control unit 30.

In explaining the solar power generation device 1 according to the second embodiment of the disclosure, only the control unit 30 which is not described in the solar power generation device 1 according to the first embodiment of the disclosure will be explained.

As for the remaining configuration of the solar power generation device 1 according to the second embodiment of the disclosure, the description of the solar power generation device 1 according to the first embodiment of the disclosure may be applied as it is.

The control unit 30 may be connected to the connector 20 to detect whether the connector 20 is operating. In detail, the control unit 30 may detect whether the safety cutoff portion 400 is operated according to temperature changes to interrupt electrical connections between a plurality of solar cell modules 10.

In case that the safety cutoff portion 400 is thermally deformed due to overheating of the safety cutoff portion 400 and the electrical connections between a plurality of solar cell modules 10 are interrupted, a current value of 0 (zero) ampere may be received by the control unit 30, and the control unit 30 may determine that an arc or fire has occurred in the connector 20. At this time, the control unit 30 may output an alarm.

When the fire is extinguished and the temperature of the safety cutoff portion 400 drops below a set temperature, the safety cutoff portion 400 thermally deformed may be restored to the original shape thereof, so that a plurality of solar cell modules 10 may be electrically connected with each other. When a current value exceeding a set ampere is received by the control unit 30, the control unit 30 may determine that it is in a normal state, and solar power generation may operate normally.

A connector and a solar power generation device including the connector according to the disclosure may prevent fire in a solar power generation device 1 caused by overheating of a connector 20 by a safety cutoff portion 400 which cuts off power by being thermally deformed when heated above a set temperature.

Although the disclosure has been described with reference to the embodiments shown in the drawings, these are merely exemplary, and those skilled in the art will understand from this that various modifications and equivalent other embodiments are possible. Therefore, the technical protection scope of the disclosure should be defined by the following claims.

### Industrial Applicability

According to the disclosure, a connector and a solar power generation device including the connector are provided. In addition, embodiments of the disclosure may be applied to a connector for electrically connecting solar cell modules and a solar power generation device including the connector, which are used in the industry.

## Claims

1. A connector comprising:
a first terminal portion;
a second terminal portion spaced apart from the first terminal portion; and
a safety cutoff portion provided between the first terminal portion and the second terminal portion, the safety cutoff portion operated according to temperature changes to interrupt an electrical connection between the first terminal portion and the second terminal portion.

2. The connector of claim 1, wherein
the safety cutoff portion includes
a first connection portion connected to the first terminal portion,
a second connection portion connected to the second terminal portion, and
a deformation portion of which an electrical connection to at least one of the first connection portion and the second connection portion is interrupted.

3. The connector of claim 2, wherein
the deformation portion is connected to the first connection portion, and has a free end which is not secured to the second connection portion and is in contact with the second connection portion, and
the deformation portion is thermally deformed, when a temperature is equal to or higher than a set temperature, to space the free end apart from the second connection portion.

4. The connector of claim 2, wherein
the deformation portion is subjected to bending deformation.

5. The connector of claim 2, wherein
the deformation portion includes
a first deformation member and
a second deformation member laminated with the first deformation member.

6. The connector of claim 5, wherein
the first deformation member and the second deformation member have different coefficients of thermal expansion.

7. The connector of claim 2, further comprising
a cover member surrounding the deformation portion and the second connection portion.

8. The connector of claim 7, wherein
the cover member is provided with a notch.

9. The connector of claim 8, wherein
the cover member is broken when the deformation portion is deformed.

10. The connector of claim 2, further comprising
an elastic member provided on a side of the deformation portion to support the deformation portion, the elastic member providing elastic force in a direction opposite to a deformation direction of the deformation portion.

11. The connector of claim 10, wherein
the elastic member has a variable length according to deformation of the deformation portion.

12. The connector of claim 1, wherein
the safety cutoff portion includes
a first connection portion connected to the first terminal portion,
a second connection portion connected to the second terminal portion, a first deformation portion connected to the first connection portion and spaced apart from the second connection portion, and
a second deformation portion connected to the second connection portion, spaced apart from the first connection portion, and in contact with the first deformation portion to be electrically connected to the first deformation portion.

13. The connector of claim 12, wherein
the first deformation portion and the second deformation portion are thermally deformed and spaced apart from each other, when a temperature is equal to or higher than a set temperature.

14. The connector of claim 13, wherein
the first deformation portion and the second deformation portion are bent in opposite directions.

15. The connector of claim 13, wherein
a separation distance between the first deformation portion and the second deformation portion varies depending on voltage.

16. The connector of claim 1, further comprising
a housing portion which accommodates the first terminal portion, the second terminal portion, and the safety cutoff portion.

17. A solar power generation device comprising:
a plurality of solar cell modules; and
the connector of claim 1 for electrically connecting a plurality of the solar cell modules with each other.

18. The solar power generation device of claim 17, wherein
the connector interrupts electrical connections between a plurality of the solar cell modules according to temperature changes.

19. The solar power generation device of claim 17, further comprising
a control unit connected to the connector to detect whether the connector is operating.

20. The solar power generation device of claim 19, wherein
the control unit outputs an alarm when the connector is operated to interrupt electrical connections between a plurality of the solar cell modules.
